# FASCICULE DE BREVET EUROPEEN

(11) **EP 3 852 986 B1**
(45) Date de publication et mention de la délivrance du brevet: **14.05.2025**
(21) Numéro de dépôt: 19790670.4
(22) Date de dépôt: 18.09.2019
(51) Int. Cl.: B27K 3/02, B27H 1/00, B27K 3/15, B27K 5/06, C08L 33/12

(54) **PROCÉDÉ DE FABRICATION D'UNE PIÈCE EN MATÉRIAU LIGNO-CELLULOSIQUE**
VERFAHREN ZUR HERSTELLUNG EINES TEILS AUS LIGNOCELLULOSEMATERIAL
METHOD FOR PRODUCING A PART MADE FROM LIGNOCELLULOSIC MATERIAL

(30) Priorité: 20.09.2018 FR 1858555
(43) Date de publication de la demande: 28.07.2021
(73) Titulaire: SAS Woodoo, 75001 Paris (FR)
(72) Inventeur: THEVENIN, Raphaële, 75018 PARIS (FR); BOITOUZET, Timothée, 75001 PARIS (FR)
(74) Mandataire: Santarelli
(86) Numéro de dépôt international: PCT/FR2019/052177
(87) Numéro de publication internationale: WO 2020/058629

(56) Documents cités:
- JP-B2- 6 244 808
- US-B2- 6 649 245

## Description

La présente invention concerne un procédé de fabrication d' une pièce en matériau ligno-cellulosique.

L'utilisation de pièces en matériau ligno-cellulosique, et notamment en bois, est très prisée pour l'esthétisme naturel, la couleur chaude et le touché spécifique du bois. Elle permet d'ennoblir les structures habillées par une pièce de placage en bois.

Ainsi, le placage bois est actuellement très recherché pour le mobilier, l'architecture d'intérieur, l'habillage des intérieurs de véhicule automobile, ou encore dans le domaine aéronautique ou nautique.

On recherche également à utiliser des placages bois de formes diverses, en créant par exemple des surfaces courbes par mise en forme d'une plaque de bois. Toutefois, le placage bois est fragile et présente des lignes de rupture ou des déchirures lorsqu'il est mis en forme et fortement courbé.

On connaît par exemple une pièce de bois décrite dans le document US2008/0020222, formée à partir d'une plaque de bois, d'épaisseur comprise entre 0,1 et 1 mm, et imprégnée d'une résine afin d'apporter une certaine flexibilité à la plaque de bois. Cette plaque de bois peut ainsi être déformée pour obtenir une pièce de bois de forme tridimensionnelle choisie.

Le document US2008/0020222 décrit en particulier différents modes de réalisation dans lesquels plusieurs plaques de bois, imprégnées d'une résine, sont empilées et collées l'une à l'autre avant d'être déformées par mise en œuvre d'un procédé de pressage à chaud. Deux plaques de bois superposées, avec leur direction de grain respective perpendiculaire l'une à l'autre, peuvent ainsi être déformées pour constituer un élément de haut-parleur, avec une portion plane centrale et une portion périphérique en forme de tronc de cône évasé.

Toutefois, la superposition de plaques de bois pour réaliser une pièce de bois déformable conduit nécessairement à l'obtention de pièces d'épaisseur importante. Le poids de telles pièces s'en trouve augmenté, ce qui peut freiner leur utilisation notamment dans le domaine de l'intérieur automobile ou aéronautique. En outre, un soin particulier doit être apporté lors de la déformation des plaques de bois superposées par pressage à chaud, afin de conserver l'intégrité de la pièce formée de plaques de bois empilées et collées l'une à l'autre. Le comportement du bois n'étant pas prévisible lors de sa mise en forme, le taux de rebut est très élevé, augmentant le coût final de la pièce de bois déformable.

On connaît également un matériau composite décrit dans le document US6649245, formé d'un placage de bois ultra fin ayant une épaisseur comprise entre 0,07 mm et 0,254 mm et d'un ou plusieurs films en plastique imprégnant le placage de bois.

On connaît en outre un matériau composite décrit dans le document JP6244808, formé à partir de bois qui est digéré (une partie de la lignine du bois est retirée), rincé, séché, découpé, stratifié puis imprégné avec une résine. La résine est ensuite durcie dans une forme souhaitée. La présente invention a pour but de proposer une pièce en matériau ligno-cellulosique et un procédé de fabrication associé qui permettent d'obtenir des pièces en matériau ligno-cellulosique palliant les inconvénients précités.

A cet effet, la présente invention concerne un procédé tel que défini par la revendication 1.

La Demanderesse a constaté qu'en préparant une pièce à partir d'un matériau ligno-cellulosique en partie délignifié et imprégné d'un polymère, il était possible de réaliser une pièce présentant au moins une portion à double courbure à partir d'une feuille unique.

Dans le matériau ligno-cellulosique en partie délignifié, la lignine (composé chimique réparti de manière non homogène entre les fibres de cellulose du matériau ligno-cellulosique) est remplacée par le polymère d'imprégnation. Ce dernier joue un rôle de renforcement, maintenant les fibres de celluloses entre elles et apportant un gainage uniforme et homogène aux fibres de cellulose. Quand il est chauffé, le polymère d'imprégnation est plus flexible que la lignine qu'il remplace, tout en ayant un module de Young suffisamment élevé pour conserver un gainage et un lien mécanique entre les fibres de cellulose.

La feuille en matériau ligno-cellulosique partiellement délignifié et imprégné d'un polymère est ainsi renforcée mécaniquement et peut subir des déformations en flexion, torsion, traction, et compression plus importantes. Il est ainsi possible d'obtenir des formes géométriques très variées, inatteignables avec des feuilles de bois brut.

Il est ainsi possible d'obtenir une pièce en matériau ligno-cellulosique, formée d'une seule feuille et présentant une surface à double courbure. La pièce peut ainsi prendre une forme tridimensionnelle très originale pour une pièce en matériau ligno-cellulosique, et par exemple, une surface paraboloïde hyperbolique, une forme hémisphérique, une forme de coque, de cône évasé, de cylindre fuselé, et plus généralement tout type de surfaces gauches (surfaces non développables).

La mise en forme avec une feuille unique permet d'obtenir une pièce très légère, sans croisement des fibres de matériau ligno-cellulosique généré par la superposition de plaques de bois dans l'art antérieur.

La pièce en matériau ligno-cellulosique présente des propriétés mécaniques améliorées, et notamment une meilleure résistance aux chocs et à la rupture. Elle possède également une meilleure ténacité, c'est-à-dire une forte résistance à la rupture et une faible aptitude à la propagation des fissures.

Une telle pièce en matériau ligno-cellulosique peut être utilisée sans nécessiter de renforts mécaniques, tels qu'une couche de renfort en textile.

Selon un mode de réalisation avantageux, la pièce comporte au moins un accessoire surmoulé sur ladite feuille, ledit au moins un accessoire étant moulé dans un polymère de surmoulage adapté à adhérer au polymère d'imprégnation de ladite feuille.

Le surmoulage d'un accessoire permet d'apporter des fonctions diverses à la pièce en matériau ligno-cellulosique, afin d'obtenir une pièce finie directement utilisable. Les accessoires peuvent par exemple être des attaches de fixation, permettant de fixer une pièce en matériau ligno-cellulosique sur une structure externe.

Le surmoulage d'un accessoire est rendu possible grâce à la compatibilité chimique des polymères de surmoulage et d'imprégnation, leur permettant d'adhérer l'un à l'autre.

La pièce en matériau ligno-cellulosique comporte au moins une partie translucide, le coefficient de transmission lumineuse de ladite partie translucide étant au moins égal à 4%.

La pièce en matériau ligno-cellulosique peut ainsi être utilisée comme interface d'un dispositif d'affichage ou d'un écran de contrôle, avec rétroéclairage par exemple.

Avantageusement, le matériau ligno-cellulosique est du bois comprenant de la lignine et un réseau de cellulose et d'hémicellulose, ledit bois étant délignifié, la fraction de lignine retirée étant comprise entre 40% et 90% en poids de la lignine présente dans ledit bois.

Il est important que le matériau ligno-cellulosique soit partiellement délignifié mais pas totalement afin de conserver la structure de la pièce initiale en matériau ligno-cellulosique.

En conservant la structure cellulosique et hemicellulosique du matériau ligno-cellulosique, la pièce présente une finition et un aspect visuel proches du bois. Le toucher de la pièce peut rester proche de celui du bois brut.

La fraction de lignine retirée peut être plus faible, et par exemple égale à 20%, voire 10% en poids de la lignine présente dans le bois.

En pratique, la feuille en matériau ligno-cellulosique au moins partiellement délignifié et imprégné d'un polymère d'imprégnation peut comprendre une fraction de polymère d'imprégnation comprise entre 30% et 80% en masse par rapport à la masse totale de ladite feuille.

Avantageusement, le polymère d'imprégnation est une résine thermoplastique, de préférence un poly méthacrylate de méthyle (PMMA).

Dans un mode de réalisation, l'épaisseur de ladite feuille est comprise entre 0,1 et 3 mm.

La pièce en matériau ligno-cellulosique est alors bien adaptée à former une pièce de placage.

Dans un mode de réalisation, ladite portion courbe a une courbure sensiblement identique dans deux plans orthogonaux, de rayon de courbure inférieur à 80 mm, et de préférence inférieur à 40 mm. Par exemple, ladite portion courbe a un rayon de courbure sensiblement égal à 20 mm.

Dans un mode de réalisation alternatif, ladite portion courbe a une courbure dans un premier plan, de rayon de courbure inférieur à 10 mm, et de préférence inférieur à 8 mm.

En pratique, lorsque ladite portion courbe a une courbure dans un premier plan de rayon de courbure supérieur ou égal à 10 mm, la courbure dans un second plan orthogonal audit premier plan peut avoir un rayon de courbure inférieur à 4 mm, et de préférence compris entre 1,5 et 2,5 mm.

La pièce en matériau ligno-cellulosique peut ainsi présenter des rayons de courbure très faibles dans une portion de surface à double courbure, inatteignables avec des pièces de bois naturel et indépendamment des directions des fibres du bois.

La fabrication de la pièce en matériau ligno-cellulosique permet d'obtenir des formes tridimensionnelles variées à partir d'une feuille unique en matériau ligno-cellulosique. Un tel procédé de fabrication peut être mis en œuvre sur des types de matériaux ligno-cellulosiques ou bois très variés, permettant d'élargir la gamme des pièces de placage en bois.

Il permet d'utiliser des essences de bois plus fragiles mais moins couteuses.

Le procédé de fabrication d'une telle pièce en matériau ligno-cellulosique nécessite un nombre réduit d'opérations, ce qui conduit à des cycles de production plus court. En outre, une meilleure maîtrise de la déformation de la feuille en matériau ligno-cellulosique partiellement délignifié et imprégné d'un polymère d'imprégnation permet de limiter le taux de rebut et le coût matière première, et donc le coût de production.

En pratique, l'étape de formage peut être une étape de thermoformage.

Dans un mode de réalisation, l'étape de formage est mise en œuvre sur la feuille en matériau ligno-cellulosique partiellement délignifié et imprégné d'un polymère d'imprégnation, après l'étape de finition.

L'étape de formage est ainsi mise en œuvre sur une feuille structurée, dans laquelle le composé d'imprégnation est polymérisé. La feuille en matériau ligno-cellulosique a ainsi une structure de matériau composite formée d'un réseau tridimensionnel de polymère incorporé dans un réseau de cellulose et de lignine. Elle est facile à manipuler pour la mise en œuvre de l'étape de formage.

Dans un mode de réalisation, l'étape de formage est mise en œuvre avec un moule dont la surface de moulage est au moins partiellement micro-structurée ou sablée.

La surface de la pièce en matériau ligno-cellulosique après formage peut ainsi être personnalisée. Le toucher de la pièce peut ainsi être au choix lisse, satiné ou similaire au bois.

Dans un mode de réalisation avantageux, le procédé de fabrication comprend en outre une étape de surmoulage d'un accessoire sur ladite feuille, ledit au moins un accessoire étant moulé dans un polymère de surmoulage adapté à adhérer au polymère d'imprégnation de ladite feuille.

L'étape de surmoulage peut ainsi être intégrée au procédé de fabrication de la pièce en matériau ligno-cellulosique, permettant d'accessoiriser la pièce en matériau ligno-cellulosique pour son utilisation future. L'étape de surmoulage améliore en outre la stabilité dimensionnelle de la pièce en matériau ligno-cellulosique fabriquée à partir de la feuille en matériau ligno-cellulosique.

L'étape de surmoulage permet d'apporter des fonctions à la pièce en matériau ligno-cellulosique, ce qui est difficile à réaliser sur une pièce en bois brut sans l'ajout de renforts. La pièce en matériau ligno-cellulosique peut être recyclée : en chauffant la pièce en matériau ligno-cellulosique à une température supérieure à la température de transition vitreuse du polymère d'imprégnation thermoplastique, il est possible de thermoformer cette feuille afin d'obtenir une pièce de forme différente. Le cycle de vie d'une pièce en matériau ligno-cellulosique peut ainsi être allongé grâce aux possibilités de recyclage.

A titre d'exemples, la pièce en matériau ligno-cellulosique peut être une interface homme-machine (IHM) d'un dispositif d'affichage ou d'un écran tactile, une structure d'habillage d'un habitacle, notamment d'un véhicule automobile, d'un aéronef ou d'un véhicule nautique, ou peut former une structure de boîtier, notamment d'un packaging cosmétique.

D'autres particularités et avantages de l'invention apparaîtront encore dans la description ci-après.

Aux dessins annexés, donnés à titre d'exemples non limitatifs :
- les figures 1A et 1B représentent schématiquement en vue de face et en coupe une pièce en matériau ligno-cellulosique selon un premier mode de réalisation ;
- les figures 2A et 2B illustrent schématiquement en vue de dessous et en coupe une pièce en matériau ligno-cellulosique selon un deuxième mode de réalisation;
- les figures 3A et 3B illustrent en coupe une pièce en matériau ligno-cellulosique selon un troisième mode de réalisation;
- la figure 4 est un schéma bloc illustrant le principe d'un procédé de fabrication d'une pièce en matériau ligno-cellulosique selon un mode de réalisation de l'invention ; et
- la figure 5 est un schéma bloc illustrant le principe d'un procédé de transformation d'une pièce en matériau ligno-cellulosique selon un mode de réalisation.

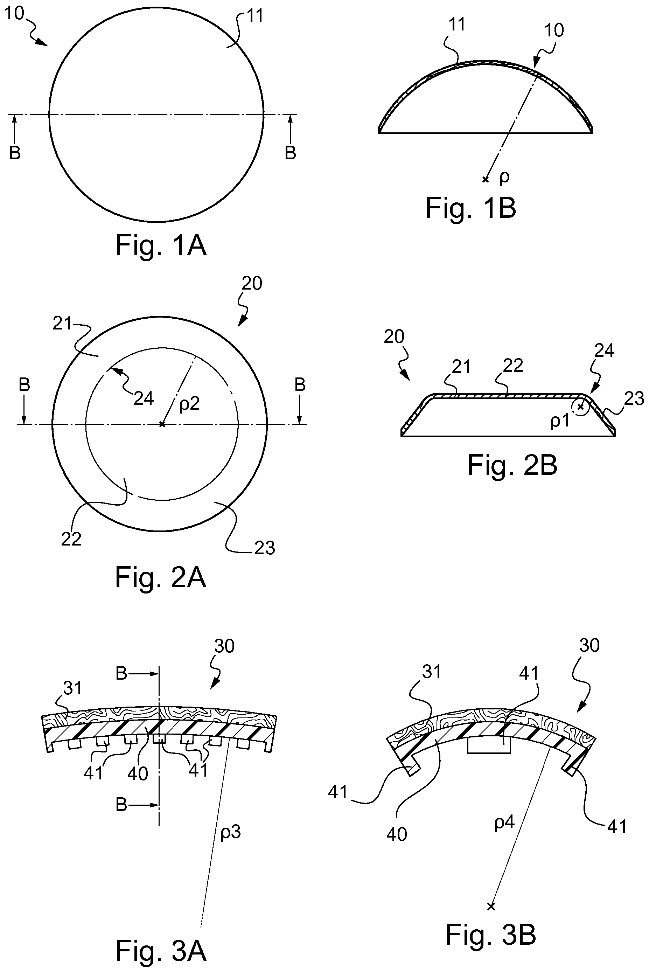

On va décrire tout d'abord en référence aux figures 1A et 1B un premier mode de réalisation d'une pièce en matériau ligno-cellulosique.

La pièce en matériau ligno-cellulosique 10 est formée d'une unique feuille 11 en matériau ligno-cellulosique partiellement délignifié et imprégné d'un polymère d'imprégnation.

Comme indiqué ci-après, le matériau ligno-cellulosique n'est que partiellement délignifié (et non totalement).

Le matériau ligno-cellulosique est de préférence du bois de tout type d'essences, et par exemple du chêne, du noyer, du peuplier, du frêne, de l'érable ou encore du sapelli.

Le matériau ligno-cellulosique est par exemple une coupe de bois et de préférence une coupe longitudinale (coupe longitudinale radiale CLR ou coupe longitudinale tangentielle CLT) ou une coupe transversale (CT).

Le bois, comprenant de la lignine et un réseau de cellulose et d'hémicellulose, est partiellement délignifié.

Selon l'essence de bois utilisée, la fraction de lignine retirée peut être plus ou moins importante.

A titre d'exemple non limitatif, la fraction de lignine retirée est comprise entre 40% et 90% en poids de la lignine présente dans le bois d'origine.

Cette fraction de lignine retirée peut être plus faible, et par exemple être sensiblement égale à 20% ou 10% en poids de la lignine présente dans le bois d'origine.

La lignine est responsable de la rigidité du bois d'origine.

Une délignification partielle du bois permet de conserver sa structure initiale tout en le rendant légèrement plus souple.

Des analyses par spectroscopie ou par microscope permettent d'observer la structure de la lignine, plus ou moins modifiée après délignification, contrairement à la cellulose et l'hémicellulose qui restent intactes.

Le matériau ligno-cellulosique est imprégné d'un polymère d'imprégnation, adapté à remplir les interstices présents dans le réseau de cellulose et d'hémicellulose et également à combler les espaces libérés par la lignine retirée. Le polymère d'imprégnation pénètre ainsi au cœur de la structure du matériau ligno-cellulosique afin de renforcer mécaniquement et gainer les fibres de cellulose du bois.

Le polymère d'imprégnation peut être un mélange de polymères ou un mélange de polymère(s) et monomère(s), thermoplastiques et/ou thermodurcissables.

Grâce à la délignification au moins partielle du matériau ligno-cellulosique, la feuille peut comprendre une fraction de polymère d'imprégnation comprise entre 30% et 80% en masse par rapport à la masse totale de la feuille.

Bien entendu, les valeurs mentionnées ci-dessus pour la fraction de lignine retirée et la fraction de polymère d'imprégnation sont données à titre d'exemples non limitatifs.

Le taux de délignification et/ou le polymère d'imprégnation utilisé sont sélectionnés pour obtenir une pièce en matériau ligno-cellulosique comportant au moins une partie translucide.

Une partie translucide, laissant passer au travers la lumière, possède un coefficient de transmission lumineuse au moins égal à 4 %.

L'épaisseur de la feuille 11 formant la pièce en matériau ligno-cellulosique 10 est comprise entre 0,1 et 3 mm.

De préférence, cette épaisseur peut être comprise entre 0,1 et 2 mm, ou encore entre 0,4 et 1,3 mm.

L'épaisseur de la feuille en matériau ligno-cellulosique 11 peut être égale à 0,6 mm ou 0,9 mm dans des exemples de réalisation particuliers d'une pièce en matériau ligno-cellulosique.

La feuille 11 forme ici à elle seule la pièce en matériau ligno-cellulosique 10, qui présente ainsi une épaisseur réduite ce qui limite son poids. La feuille en matériau ligno-cellulosique 11 peut ainsi former une pièce de placage adaptée à habiller ou revêtir une structure de support.

La pièce en matériau ligno-cellulosique 10 telle qu'illustrée aux figures 1A et 1B comporte une portion courbe présentant une surface à double courbure.

Dans ce mode de réalisation, l'intégralité de la pièce a une forme à double courbure. Bien entendu, seule une portion de la pièce en matériau ligno-cellulosique pourrait présenter une telle forme à double courbure.

Dans le mode de réalisation aux figures 1A et 1B, la portion courbe a une courbure ρ sensiblement identique dans deux plans orthogonaux.

La forme de la pièce en matériau ligno-cellulosique 10 est ainsi une portion de sphère de rayon ρ.

Le rayon de courbure ρ est au moins inférieur à 80 mm, et de préférence inférieur à 40 mm.

Selon les modes de réalisation souhaités, le rayon de courbure ρ peut être égal dans les deux plans orthogonaux à 20 mm.

La pièce en matériau ligno-cellulosique 10 ainsi obtenue, de faible rayon de courbure, peut permettre de réaliser des décors en bois de forme hémisphérique très bombée.

Un deuxième mode de réalisation est illustré aux figures 2A et 2B.

La pièce en matériau ligno-cellulosique 20 est formée d'une feuille unique 21 similaire à celle décrite précédemment en référence au premier mode de réalisation de l'invention.

Dans ce deuxième mode de réalisation, la pièce en matériau ligno-cellulosique 20 possède une portion courbe 24 présentant une surface à double courbure de rayon de courbure différent dans deux plans orthogonaux.

A titre d'exemple non limitatif, la pièce en matériau ligno-cellulosique 20 illustrée aux figures 2A et 2B est un boîtier, de forme circulaire dans un plan (correspondant à la vue de dessous illustrée à la figure 2A).

La pièce 20 comporte ainsi un fond 22 sensiblement plat et un bord périphérique 23 s'évasant à partir du fond 22.

La portion courbe 24, correspondant à la zone de raccordement entre le fond plat 22 et le bord périphérique 23, présente ainsi une surface à double courbure dans deux plans orthogonaux.

En particulier, lorsque la courbure dans l'un des plans n'est pas trop prononcée, la courbure dans l'autre plan, orthogonal, peut présenter un rayon de courbure faible, et par exemple inférieur à 10 mm, et de préférence inférieur à 8 mm.

A titre d'exemple, lorsque le rayon de courbure de la portion courbe est supérieur ou égal à 10 mm dans un premier plan, le rayon de courbure dans un second plan, orthogonal au premier plan peut être inférieur à 4 mm, et par exemple compris entre 1,5 et 2,5 mm.

A titre indicatif, dans le mode de réalisation illustré aux figures 2A et 2B, la portion courbe 24 a un premier rayon de courbure ρ₁ de l'ordre de 4 mm, dans un plan transversal de la pièce 20, et un second rayon de courbure ρ₂ de l'ordre de 7,5 cm, dans un plan orthogonal, parallèle au plan formé par le fond plat 22 de la pièce 20.

Un troisième mode de réalisation d'une pièce en matériau ligno-cellulosique est illustré aux figures 3A et 3B.

La pièce en matériau ligno-cellulosique 30 est formée d'une feuille unique 31, similaire à celle décrite précédemment en référence au premier mode de réalisation de l'invention.

Dans ce mode de réalisation, la pièce en matériau ligno-cellulosique 30 est formée d'une portion courbe présentant une surface à double courbure dans un plan longitudinal (figure 3A) et un plan transversal (figure 3B).

Les rayons de courbure ρ₃, ρ₄ dans les deux plans orthogonaux (plan longitudinal et plan transversal de la pièce 30) sont identiques, similaires ou différents.

Dans ce troisième mode de réalisation, la pièce en matériau ligno-cellulosique 30 comporte au moins un accessoire 40 surmoulé sur la feuille 31.

Dans ce mode de réalisation, et à titre non limitatif, l'accessoire 40 forme une couche surmoulée sur une face intérieure concave de la feuille 31 de la pièce en matériau ligno-cellulosique 30. La couche surmoulée 40 comporte en outre une série de plots 41 formant des saillies ou clips pour permettre l'accrochage de la pièce en matériau ligno-cellulosique à un support (non illustré).

L'accessoire 40 est surmoulé dans un polymère de surmoulage adapté à adhérer au polymère d'imprégnation de la feuille 31 de la pièce en matériau ligno-cellulosique 30.

A titre d'exemple non limitatif, le polymère d'imprégnation peut être un polymère thermoplastique tel qu'un poly méthacrylate de méthyle (PMMA), le polymère de moulage étant également un poly méthacrylate de méthyle.

Plus généralement, le polymère d'imprégnation et le polymère de surmoulage peuvent être identiques ou différents l'un de l'autre.

Le surmoulage d'un tel accessoire permet de fonctionnaliser la pièce en matériau ligno-cellulosique 30 et de lui associer des moyens d'accrochage divers (clips, plots en plastiques, tétons) lorsque la pièce en matériau ligno-cellulosique est destinée à être fixée sur un support.

Une telle pièce en matériau ligno-cellulosique pourrait être rapportée telle une pièce de placage sur un support, par exemple pour équiper l'intérieur d'un véhicule automobile. Une telle pièce de placage pourrait, titre d'exemple non limitatif, être utilisée comme tableau de bord d'un véhicule automobile, nautique ou aéronautique, être utilisée comme ilot central à l'avant d'un véhicule automobile, ou comme habillage des portières d'un véhicule.

En particulier, lorsque la pièce en matériau ligno-cellulosique comporte au moins une partie translucide comme indiqué précédemment, elle peut être utilisée comme interface homme-machine (IHM) d'un dispositif d'affichage ou d'un écran tactile, éventuellement rétro éclairé. La partie translucide peut ainsi correspondre à une ou plusieurs zones de commande tactile. Par exemple, lorsque la pièce en matériau ligno-cellulosique au moins en partie translucide habille une portière, elle peut comporter des commandes tactiles pour l'ouverture et la fermeture des fenêtres du véhicule.

Dans d'autres modes de réalisation, les accessoires peuvent être un contour plastique ou un clip de fermeture, par exemple lorsque la pièce en matériau ligno-cellulosique est destinée à former la structure d'un boîtier.

Ainsi, à titre d'exemple non limitatif, la pièce en matériau ligno-cellulosique 20 illustrée aux figures 2A et 2B pourrait constituer un fond de boîtier et la pièce en matériau ligno-cellulosique 10 illustrée aux figures 1A et 1B un couvercle de boîtier.

La réalisation d'un tel boîtier et le maintien en position du couvercle sur le fond de boîtier pourraient être obtenus grâce au surmoulage sur le pourtour des pièces en matériau ligno-cellulosique 10, 20 d'un contour plastique complémentaire et d'un clip de fermeture (non représentés).

Il est possible aussi de surmouler uniquement un système de jointure ou charnière sur un côté du boitier et un système de fermeture sur un côté opposé du boitier.

Un tel boîtier pourrait par exemple être utilisé dans le domaine de la cosmétique, bijouterie, lunetterie, ...

L'accessoire surmoulé peut n'être présent que sur une partie de la pièce en matériau ligno-cellulosique. Toutefois, l'ajout d'une couche de polymère de surmoulage sur la pièce en matériau ligno-cellulosique permet de renforcer celle-ci mécaniquement et d'améliorer sa stabilité dimensionnelle.

Plus généralement, l'accessoirisation ou fonctionnalisation de la pièce en matériau ligno-cellulosique peut être réalisée autrement que par surmoulage d'un accessoire : l'accessoire peut également être collé à la feuille en matériau ligno-cellulosique partiellement délignifié et imprégné d'un polymère d'imprégnation.

L'accessoire peut également être réalisé par extrusion.

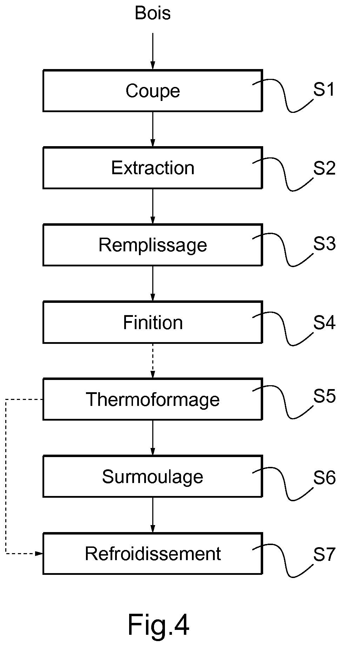

On va décrire à présent en référence à la figure 4 un mode de réalisation d'un procédé de fabrication d'une pièce en matériau ligno-cellulosique telle que décrite précédemment.

Le procédé de fabrication d'une pièce en matériau ligno-cellulosique peut comporter au préalable une étape de coupe S1 d'une plaque en matériau ligno-cellulosique.

Comme indiqué précédemment, cette plaque en matériau ligno-cellulosique peut être obtenue à partir d'une coupe longitudinale ou transversale d'une pièce de bois.

Le procédé de fabrication comporte ensuite dans son principe une étape d'extraction S2 partielle de la lignine présente dans la plaque en matériau ligno-cellulosique, une étape de remplissage S3 par un composé d'imprégnation de la plaque au moins partiellement délignifié et une étape de finition S4 par polymérisation et/ou réticulation du composé d'imprégnation de sorte à produire une feuille en matériau ligno-cellulosique au moins partiellement délignifié et imprégné d'un polymère d'imprégnation.

De multiples exemples de ce procédé de délignification et d'imprégnation sont décrits en détail dans le document WO 2017098149, dont le contenu est incorporé par référence à la présente description.

En particulier, l'étape d'extraction S2 de la lignine peut être mise en œuvre par trempage et lavage, éventuellement couplée dans une même étape, de la plaque en matériau ligno-cellulosique dans une solution permettant une dissolution partielle de la lignine.

La fraction de lignine retirée peut être comprise entre 40 % et 90 % en poids de la lignine présente dans le bois.

Elle peut également être plus faible, et de l'ordre de 20% ou 10%.

L'étape de remplissage S3 est une étape au cours de laquelle un composé d'imprégnation pénètre dans la structure partiellement délignifiée de la plaque en matériau ligno-cellulosique.

Le composé d'imprégnation peut être un polymère ou copolymère, de préférence thermoplastique.

Alternativement, le composé de remplissage peut être un monomère polymérisable, l'étape de finition S4 permettant ensuite par polymérisation d'obtenir un polymère d'imprégnation.

Le polymère est là encore de préférence thermoplastique, bien qu'un polymère thermodurcissable soit envisageable.

Le composant d'imprégnation peut également être un mélange de polymère thermoplastique et de polymère thermodurcissable.

Il peut également être un mélange de monomère et polymère ou comporter uniquement des monomères.

Le composant d'imprégnation peut être pétro-sourcé ou bio-sourcé.

A titre d'exemple non limitatif, le composé d'imprégnation introduit à l'étape d'imprégnation S3 peut être un méthacrylate de méthyle (MMA) permettant à l'étape de finition S4 d'obtenir par polymérisation un poly méthacrylate de méthyle (PMMA).

L'étape de finition S4 permet ainsi de produire après polymérisation et/ou réticulation du composé d'imprégnation une feuille en matériau ligno-cellulosique au moins partiellement délignifié et imprégné d'un polymère d'imprégnation.

La feuille peut présenter une épaisseur comprise entre 0,1 et 3 mm, adaptée à former par exemple une pièce de placage.

A titre d'exemple, on peut réaliser une pièce en matériau ligno-cellulosique en utilisant une plaque en matériau ligno-cellulosique d'une épaisseur égale à 0,6 ou 0,9 mm.

Après imprégnation avec un polymère thermoplastique tel que le PMMA et finition, la feuille peut avoir une épaisseur de l'ordre de 0,95 mm (+ ou - 0,05 mm), en ajoutant plus ou moins de PMMA sur la plaque en matériau ligno-cellulosique.

Le procédé de fabrication de la pièce en matériau ligno-cellulosique comporte en outre une étape de formage S5.

A titre d'exemple de réalisation, l'étape de formage S5 peut mettre en œuvre un thermoformage de la pièce sous des conditions de chauffage.

Le formage de la pièce peut également être réalisé par formage à chaud, thermocompression, estampage, embossage ou tout type de formage, à froid et à chaud, avec ou sans pression positive ou négative mise en œuvre lors de l'étape de formage.

Comme symbolisé à la figure 4 par la flèche en pointillé entre l'étape de finition S4 et l'étape de thermoformage S5, ces deux étapes du procédé de fabrication peuvent être décorrélées, c'est-à-dire mises en œuvre de manière dissociée dans le temps et l'espace.

Dans un tel mode de réalisation, à l'issue de l'étape de finition S4, la feuille produite est refroidie, de préférence naturellement, à température ambiante, le polymère d'imprégnation et le matériau ligno-cellulosique partiellement délignifié formant ainsi une structure composite rigide sous forme de feuille.

L'étape de thermoformage S5 peut ainsi être mise en œuvre plusieurs jours, semaines ou mois après la production de la feuille en matériau ligno-cellulosique partiellement délignifié imprégné d'un polymère d'imprégnation.

L'étape de thermoformage S5 est mise en œuvre dans ce mode de réalisation sur la feuille afin d'obtenir au moins une portion courbe présentant une surface à double courbure.

Cependant, le procédé de fabrication n'est pas limité au formage d'une portion courbe présentant une surface à double courbure.

Le procédé de fabrication peut également être mis en œuvre avec une étape de formage de la feuille de façon à obtenir une portion courbe à simple courbure, telle qu'une portion conique ou tronconique ou encore une portion cylindrique ou semi-cylindrique.

La pièce peut comporter une portion courbe à simple courbure, de rayon de courbure très faible. On peut ainsi atteindre un rayon de l'ordre de 1,5 mm lorsque la courbure est réalisée dans une direction parallèle à la direction des fibres du matériau ligno-cellulosique, et de l'ordre de 2 mm lorsque la courbure est réalisée dans une direction orthogonale à la direction des fibres du matériau ligno-cellulosique.

Il est ainsi possible d'obtenir des pièces avec une portion courbe proche d'un angle droit.

Comme indiqué ci-dessus, l'étape de formage peut être mise en œuvre par différentes technologies, notamment par thermocompression, thermoformage sous vide, ou embossage.

De manière non limitative, le formage peut mettre en œuvre des procédés industriels utilisés pour produire des pièces composites, et notamment le moulage par transfert de résine (RTM ou Resin Transfert Molding) ou le moulage par transfert de résine haute pression (HP-RTM ou High Pressure Resin Transfert Molding).

A titre d'exemple, dans un mode d'utilisation de la thermocompression, l'étape de formage met en œuvre une étape de chauffage de la feuille et une étape de chauffage du moule de thermocompression.

Les températures mises en œuvre pour le chauffage de la feuille et du moule dépendent de la température de transition vitreuse du polymère d'imprégnation.

Les températures de chauffage de la feuille et du moule de thermoformage doivent ainsi être suffisantes pour fluidifier le polymère d'imprégnation, et permettre ainsi la mise en forme de la feuille, tout en conservant une viscosité à ce polymère d'imprégnation afin de conserver la structure et le maintien de la feuille en matériau ligno-cellulosique imprégné de ce polymère d'imprégnation pendant l'étape de thermoformage S5.

A titre d'exemple, lorsque le polymère d'imprégnation est un PMMA, sa température de transition vitreuse est de l'ordre de 80°C.

La feuille peut par exemple être chauffée à une température de l'ordre de 150°C, pendant une durée d'environ 30s, et de préférence inférieure à 1 mn.

Le moule de thermoformage peut être un moule thermo-régulé, porté à une température de l'ordre de 80°C.

La feuille chauffée est placée dans le moule, puis la feuille est pressée dans le moule fermé.

Le moule de thermoformage peut en outre être traité en surface (surface sablée, micro texturée, ...) afin d'obtenir différentes finitions de surface pour la pièce en matériau ligno-cellulosique.

Bien entendu, d'autres modes de mise en œuvre de la thermocompression peuvent être envisagés.

Ainsi, seule la feuille peut être chauffée, le moule n'étant pas chauffé, ni régulé en température.

Le moule pourrait être par exemple en bois ou en matière plastique.

Une étape de surmoulage S6 peut être ensuite mise en œuvre afin de surmouler un accessoire sur la feuille.

Toutefois, comme symbolisé à la figure 4 par une flèche en pointillé en sortie de l'étape de thermoformage S5, la pièce en matériau ligno-cellulosique peut être fabriquée sans accessoire. Dans un tel cas, l'étape de thermoformage S5 est directement suivie d'une étape de refroidissement S7.

De préférence, l'étape de refroidissement S7 est mise en œuvre, pendant quelques minutes, la feuille thermoformée demeurant dans le moule de thermoformage. Le moule peut être refroidi par thermo-régulation.

Au besoin, la feuille thermoformée et refroidie peut être découpée à une forme choisie.

Tout type de découpe peut être utilisé, tel qu'une découpe à chaud par un outil de découpe mécanique, par exemple un emporte-pièce, ou une découpe à froid, par exemple par fraisage ou laser.

On obtient ainsi une pièce de finition ou semi-structurelle fine et légère.

La pièce en matériau ligno-cellulosique peut présenter des portions courbes à double ou simple courbure, sans cassure ou blanchiment des fibres du matériau ligno-cellulosique.

Lorsqu'un accessoire est surmoulé sur la feuille, l'étape de surmoulage S6 met en œuvre préférentiellement un polymère de surmoulage adapté à adhérer au polymère d'imprégnation de la feuille.

De préférence, le polymère de surmoulage est identique au polymère d'imprégnation de la feuille.

Dans l'exemple décrit précédemment, le polymère de surmoulage est de préférence un poly méthacrylate de méthyle (PMMA).

Le polymère de surmoulage doit avoir une température de fusion suffisamment basse pour ne pas brûler le matériau ligno-cellulosique de la feuille thermoformée.

En outre, son coefficient de rétractation doit rester compatible avec celui de la feuille en matériau ligno-cellulosique au moins partiellement délignifié et imprégné du polymère d'imprégnation.

Le polymère de surmoulage doit de préférence être utilisable en injection.

Lors de l'étape de surmoulage S6, le moule de surmoulage et la conduite d'injection du polymère de surmoulage doivent être chauffés à une température compatible avec les conditions d'injection du polymère de surmoulage.

A l'issue de l'étape de surmoulage S6, une étape de refroidissement S7 est mise en œuvre comme décrite précédemment.

L'étape de surmoulage S6 permet ainsi de surmouler des accessoires plastiques sur la pièce en matériau ligno-cellulosique comme décrit précédemment.

Elle permet éventuellement d'apporter une surépaisseur de polymère de surmoulage sur la feuille de la pièce en matériau ligno-cellulosique, afin d'augmenter les propriétés mécaniques de la pièce en matériau ligno-cellulosique.

Le surmoulage peut également être réalisé uniquement sur le contour périphérique de la feuille.

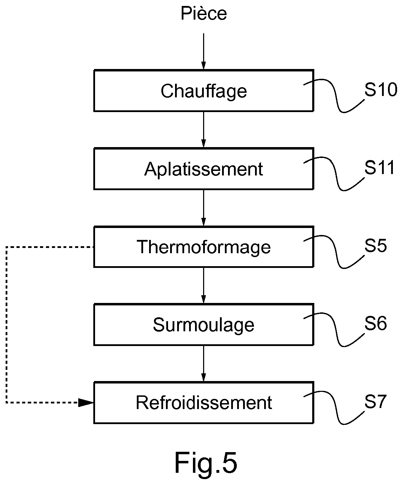

On va décrire à présent en référence à la figure 5 un mode de réalisation d'un procédé de transformation d'une pièce en matériau ligno-cellulosique telle que décrite précédemment.

Ce procédé de transformation permet de recycler une pièce en matériau ligno-cellulosique en lui conférant une nouvelle forme pour une nouvelle utilisation.

A cet effet, le polymère d'imprégnation est un polymère thermoplastique, adapté à être ramolli lorsque la pièce est chauffée.

Le procédé de transformation comprend ainsi une étape de chauffage S10 de la pièce en matériau ligno-cellulosique.

Cette étape de chauffage est conduite à une température supérieure à la température de transition vitreuse du polymère thermoplastique imprégnant la pièce en matériau ligno-cellulosique.

Comme indiqué précédemment, lorsque le polymère thermoplastique est un PMMA, de température de transition vitreuse de l'ordre de 80°C, la pièce peut être chauffée à une température de l'ordre de 150°C.

De préférence, une étape d'aplatissement S11 de la pièce chauffée est mise en œuvre afin de supprimer toutes les portions courbes de la pièce en matériau ligno-cellulosique que l'on cherche à transformer.

A partir de cette pièce chauffée et aplatie, une étape de thermoformage S5 est mise en œuvre.

Cette étape de thermoformage S5 est similaire à celle décrite précédemment en référence à la figure 4 et peut être suivie d'une étape de surmoulage S6 et d'une étape de refroidissement S7 afin d'obtenir une pièce transformée comportant au moins une portion courbe.

Cette portion courbe peut être à simple ou double courbure comme décrit précédemment.

Ce procédé de transformation permet ainsi de recycler les pièces en matériau ligno-cellulosique.

Bien entendu, l'invention n'est pas limitée aux exemples de réalisation décrits précédemment.

Comme indiqué déjà ci-dessus, les exemples dimensionnels et de matériau mis en œuvre ne sont nullement limitatifs pour la réalisation d'une pièce en matériau ligno-cellulosique selon l'invention.

Par ailleurs, le procédé de fabrication peut également mettre en œuvre simultanément les étapes de finition S4 et de thermoformage S5, appliquées sur une plaque en matériau ligno-cellulosique au moins partiellement délignifié et imprégné d'un composé d'imprégnation.

Le couplage de ces deux étapes permet d'obtenir à la fois la polymérisation et/ou réticulation du composé d'imprégnation et la courbure de la plaque en matériau ligno-cellulosique de façon à produire une feuille en matériau ligno-cellulosique partiellement délignifié et imprégné d'un polymère d'imprégnation et comprenant au moins une portion courbe.

## Revendications

1. Procédé de fabrication d'une pièce en matériau ligno-cellulosique **caractérisé en ce qu'**il comprend les étapes suivantes :
- extraction (S2) partielle de la lignine d'une plaque en matériau ligno-cellulosique ;
- remplissage (S3) par un composé d'imprégnation de ladite plaque partiellement délignifiée ;
- finition (S4) par polymérisation et/ou réticulation dudit composé d'imprégnation de sorte à produire une feuille en matériau ligno-cellulosique partiellement délignifié et imprégné d'un polymère d'imprégnation; et
- formage (S5) de sorte à obtenir une pièce en matériau ligno-cellulosique comprenant au moins une portion courbe présentant une surface à double courbure. où le taux de délignification et/ou le polymère d'imprégnation utilisé sont sélectionnés pour obtenir une pièce en matériau ligno-cellulosique comportant au moins une partie translucide avec un coefficient de transmission lumineuse au moins égal à 4 %.

2. Procédé de fabrication conforme à la revendication 1, **caractérisé en ce que** l'étape de formage (S5) est une étape de thermoformage.

3. Procédé de fabrication conforme à l'une des revendications 1 ou 2, **caractérisé en ce que** l'étape de formage (S5) est mise en œuvre sur ladite feuille en matériau ligno-cellulosique partiellement délignifié et imprégné d'un polymère d'imprégnation, après l'étape de finition (S4).

4. Procédé de fabrication conforme à l'une des revendications 1 à 3, **caractérisé en ce qu'**il comprend en outre une étape de surmoulage (S6) d'un accessoire sur ladite feuille, ledit au moins un accessoire étant moulé dans un polymère de surmoulage adapté à adhérer au polymère d'imprégnation de ladite feuille.

5. Procédé de fabrication conforme à la revendication 4, **caractérisé en ce que** le polymère de surmoulage est identique au polymère d'imprégnation de ladite feuille.

## Patentansprüche

1. Verfahren zur Herstellung eines Teils aus Lignocellulose-Material, **dadurch gekennzeichnet, dass** es die folgenden Schritte umfasst:
- partielles Extrahieren (S2) von Lignin aus einer Platte aus Lignocellulose-Material;
- Füllen (S3) mit einer Imprägnierverbindung der teilweise delignifizierten Platte;
- Endbearbeiten (S4) durch Polymerisation und/oder Vernetzung der Imprägnierverbindung, so dass eine Folie aus teilweise delignisiertem und mit einem Imprägnierpolymer imprägniertem Lignocellulose-Material hergestellt wird; und
- Umformen (S5), um ein Teil aus Lignocellulose-Material zu erhalten, das mindestens einen gekrümmten Abschnitt mit einer doppelt gekrümmten Oberfläche umfasst, wobei die Delignifizierungsrate und/oder das verwendete Imprägnierpolymer ausgewählt werden, um ein Teil aus Lignocellulose-Material zu erhalten, das mindestens einen lichtdurchlässigen Teil mit einem Lichtdurchlässigkeitskoeffizienten von mindestens 4 % enthält.

2. Herstellungsverfahren nach Anspruch 1, **dadurch gekennzeichnet, dass** der Umformschritt (S5) ein Thermoformschritt ist.

3. Herstellungsverfahren nach einem der Ansprüche 1 oder 2, **dadurch gekennzeichnet, dass** der Umformschritt (S5) nach dem Endbearbeitungsschritt (S4) auf der Folie aus teilweise delignisiertem und mit einem Imprägnierpolymer imprägniertem Lignocellulose-Material ausgeführt wird.

4. Herstellungsverfahren nach einem der Ansprüche 1 bis 3, **dadurch gekennzeichnet, dass** es ferner einen Schritt des Überformens (S6) eines Zubehörteils auf der Folie umfasst, wobei das mindestens eine Zubehörteil in ein Überformungspolymer geformt wird, das dazu ausgelegt ist, an dem Imprägnierpolymer der Folie zu haften.

5. Herstellungsverfahren nach Anspruch 4, **dadurch gekennzeichnet, dass** das Überformungspolymer identisch mit dem Imprägnierpolymer für die Folie ist.

## Claims

1. A method of manufacturing a part made from lignocellulosic material **characterized in that** it comprises the following steps:
- partially extracting (S2) the lignin from a plate of lignocellulosic material;
- filling (S3) said partly delignified plate with an impregnation compound;
- finishing (S4) by polymerization and/or cross-linking of said impregnation compound so as to produce a sheet of lignocellulosic material that is partly delignified and impregnated with an impregnation polymer; and
- shaping (S5) so as to obtain a part made from lignocellulosic material comprising at least one curved portion having a surface of dual curvature, wherein the extent of delignification and/or used the impregnation polymer are selected to obtain a part made from lignocellulosic material comprising at least one translucent part with a light transmission coefficient at least equal to 4 %.

2. A method of manufacturing according to claim 1, **characterized in that** the shaping step (S5) is a thermoforming step.

3. A method of manufacturing according to one of claims 1 or 2, **characterized in that** the shaping step (S5) is implemented on said sheet of lignocellulosic material that is partly delignified and impregnated with an impregnation polymer, after the finishing step (S4).

4. A method of manufacturing according to one of claims 1 to 3, **characterized in that** it further comprises a step of overmolding (S6) an accessory onto said sheet, said at least one accessory being molded in an overmolding polymer configured to adhere to the impregnation polymer of said sheet.

5. A method of manufacturing according to claim 4, **characterized in that** the overmolding polymer is identical to the impregnation polymer of said sheet.
